# EUROPEAN PATENT SPECIFICATION

(11) **EP 2 096 620 B1**
(45) Date of publication and mention of the grant of the patent: **19.06.2013**
(21) Application number: 09001792.2
(22) Date of filing: 09.02.2009
(51) Int. Cl.: G09G 3/14, B60Q 3/04

(54) **Indicator drive system**
Anzeigeantriebssystem
Système de commande d'indicateur

(30) Priority: 26.02.2008 JP 2008044658
(43) Date of publication of application: 02.09.2009
(73) Proprietor: DENSO CORPORATION, Kariya-city, Aichi-pref. 448-8661 (JP)
(72) Inventor: Koshoubu, Nobuaki, Kariya-city Aichi-pref. 448-8661 (JP)
(74) Representative: Kuhnen & Wacker

(56) References cited:
- US-A- 4 324 986
- US-A- 5 903 104
- US-A1- 2006 170 365

## Description

In a vehicle such as an automobile, an operating panel can be used to operate electronic equipment mounted thereon or therein. For example, an air conditioner, a car audio system, and a car navigation system can be installed inside the vehicle and can be operated from an operating panel. An operating unit of the operating panel includes, inter alia, push knobs manipulated by an occupant of the vehicle if necessary. As described in JP-A-2007-149610, push knobs can be constructed as translucent members. When an indicator light source incorporated in each of the push knobs is illuminated or is not illuminated, ON and OFF states attained by performing a pushing manipulation can be discriminated. Specifically, when the indicator light source is illuminated, the ON state can be discriminated. When the indicator light source is not illuminated, the OFF state can be discriminated.

US 4 324 986 A discloses a switch position indicating means for automobiles including a control circuit for the illuminating lamp which is provided so that the lamp illuminates the control switch when the switch is actuated, with a sufficient brightness in day time to show that the switch is actuated, but with a moderate brightness in night time wherein the light switch is actuated.

US 2006/170365 A1 discloses a non-PWM vehicle lamp dimming arrangement including supplying a current to at least one interior light source to achieve a predetermined level of illumination, and reducing the level of illumination via a shunt arrangement in response to detection of a nighttime condition.

US 5 903 104 A discloses a lighting system for vehicle, when one of the meter and interior lighting lamps is lighted up, the rheostat switch adjusts the illuminance of that one of the meter and interior lighting lamps are both lighted up, the rheostat switch simultaneously adjusts the illuminance of the meter and interior lighting lamps.

If the intensity or luminance of the indicator light source, for example when illuminated in the ON state, is adjusted for daytime discernment and is left unchanged during the nighttime, the nighttime luminance is sensed to be excessive due to the relatively dark surroundings compared to the daylight during which the luminance adjustment was made. Accordingly, the luminance of the active indicator light source must be lowered during the nighttime. In contrast, when the push knob is pushed to attain the OFF state, although the position of the push knob can be immediately identified in the daytime during which sufficient external light enters a vehicle compartment, it is difficult to recognize the location of the push knob in the nighttime when an amount of internal light is insufficient. Further, when the vehicle is run through a tunnel, the internal state of illumination in the vehicle is broadly interpreted as the state attained in the nighttime. In the nighttime, therefore, even when the push knob is pushed to attain the OFF state, the push knob is illuminated by the internal light source. Since the OFF state must be discriminated from the ON state, the luminance of the indicator light source illuminated in the OFF state in the nighttime must be set to a value smaller than the luminance of the indicator light source active and in the ON state in the nighttime. The luminance of the push knob must be adjusted in order to meet the relationship described below.

In particular, the luminance of an indicator light source active in the ON state in the daytime must be greater than the luminance of an indicator light source active in the ON state in the nighttime; and the nighttime ON luminance must be greater than the luminance of an indicator light source illuminated in the OFF state in the nighttime.

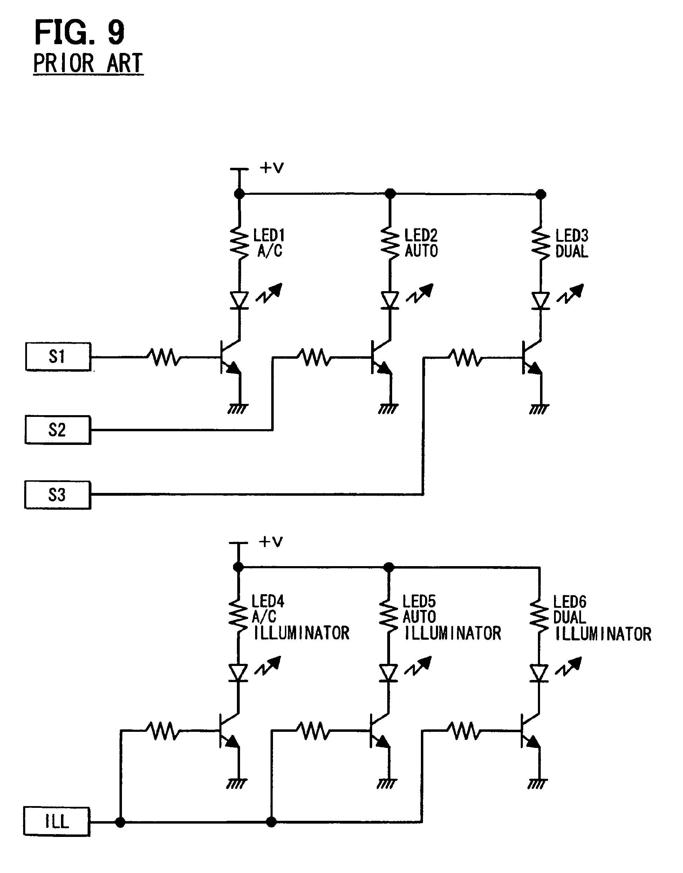

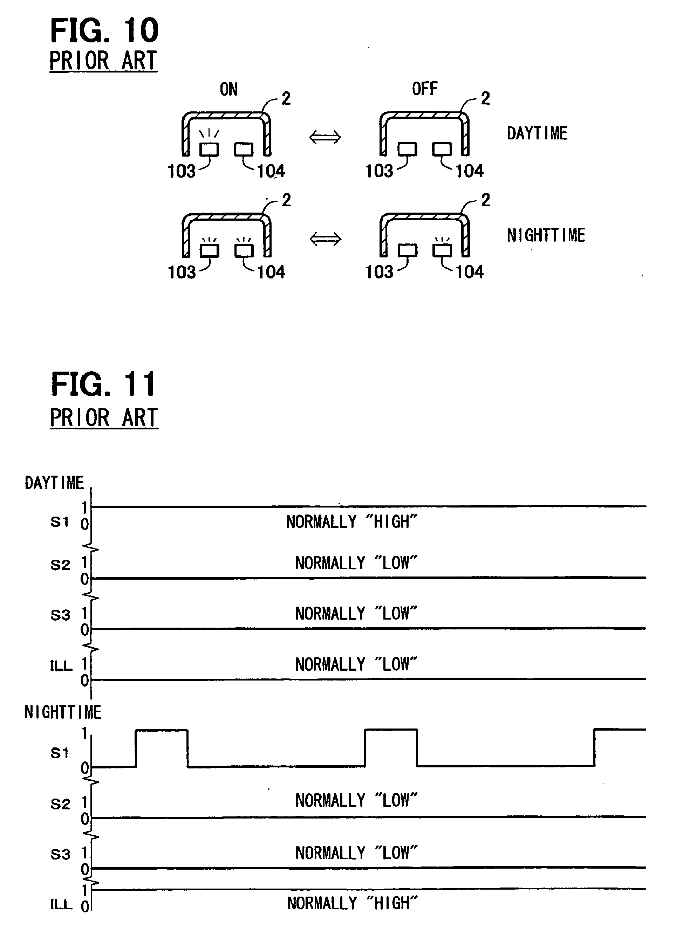

When, for example, a light-emitting diode (LED) is adopted as a light source, a conventional circuit, for example, as shown in FIG. 9, can be used to establish the above described relationships. Light-emitting diodes LED1, LED2, and LED3 are indicator light-emitting diodes that indicate the use states, that is, the ON or OFF states of the air-conditioning (A/C), automatic (Auto), and dual (Dual) facilities of an automobile air conditioner. Light-emitting diodes LED4, LED5, and LED6 are illuminator light-emitting diodes for respective push knobs A/C, Auto, and Dual. The light-emitting diodes LED1, LED2, and LED3 are controlled with indicator control signals S1, S2, and S3. The light-emitting diodes LED1, LED2, and LED3 are energized or indicating and active state when the associated signals are driven high or brought to a high level, and are de-energized or not indicating an active state when the associated signals are driven low or brought into a low level. In contrast, the light-emitting diodes LED4, LED5, and LED6 are controlled with an illumination control signal ILL. When the illumination control signal is driven high, the light-emitting diodes LED4, LED5, and LED6 are all energized and indicating and active state. When the illumination control signal is driven low, the light-emitting diodes LED4, LED5, and LED6 are all de-energized and not indicating an active state. As shown in FIG. 10, two types of light-emitting diodes, that is, an indicator light-emitting diode 103 and an illuminator light-emitting diode 104 are incorporated in a push knob 2. In the daytime, the indicator light-emitting diode 103 alone is energized at a high luminance to indicate an active state. In the nighttime, the illuminator light-emitting diode 104 is always energized so as to illuminate, and the indicator light-emitting diode 103 is de-energized so as to indicate a non-active state. Thus, light emitted from the illuminator light-emitting diode and light emitted from the indicator light-emitting diode overlap. In the nighttime, even when the indicator light-emitting diode 103 is de-energized and not indicating an active state, since the illuminator light-emitting diode 104 is retained in an illumination state, the push knob is illuminated.

In FIG. 11, an action sequence of the foregoing circuit during which the air-conditioning facility is functioning is shown. In the daytime, the signal S1 alone is driven high, and the light-emitting diode LED1 alone is energized to indicate an active state. As shown in FIG. 9, the luminance of the energized light-emitting diode is determined with the resistance of a current-limiting resistor inserted in series with the light-emitting diode LED1. In the nighttime, the light-emitting diode LED1 is energized to indicate an active state. However, since the duty cycle of the signal S1 is high during the daytime period to address daytime requirements, the daytime luminance is excessive for nighttime luminance requirements. In order to lower the nighttime luminance relative to the daytime period during which the duty cycle of the signal S1 high, the duty cycle of a signal to be outputted must be decreased. When the illumination control signal ILL is driven high, the illumination light-emitting diode s LED4, LED5, and LED6 are illuminated. As shown in FIG. 9, the luminance of the illuminated light-emitting diode is determined with the resistance of a current-limiting resistor inserted in series with the light-emitting diode.

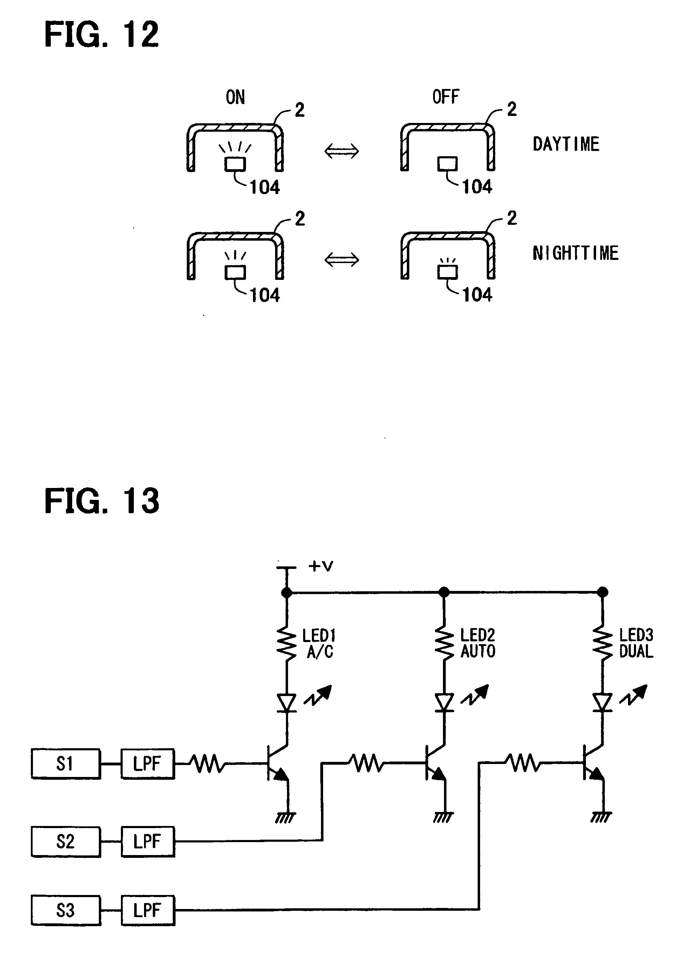

In the above circuit, however, as shown in FIG. 10, the indicator light-emitting diode 103 and illuminator light-emitting diode 104 must be mutually independently incorporated in the switch knob 2, and a drive circuit connected on another line is needed as shown in FIG. 9, which disadvantageously increases the complexity in circuitry and cost of the circuit. When multiple indicator light-emitting diodes have to be used in combination in order to cope with a high-luminance specification, the sum total of light-emitting diodes increases making it difficult to conserve installation space. Further, since the indicator light-emitting diode is combined with the illuminator light-emitting diode 104, the indicator light-emitting diode 103 may be disposed at a position on one side of the interior of the switch knob 2. In such a case, when the indicator light-emitting diode 103 alone is energized, the light-emission discernible state of the switch knob 2 varies with a position on the switch knob 2. The appearance of the switch knob 2 may deteriorate. A method of using the indicator light-emitting diode as the illuminator light-emitting diode is conceivable. In such a case, as shown in FIG. 12, the indicator light-emitting diode 103 alone is disposed in the switch knob 2. As shown in FIG. 13, the illuminator light-emitting diode 104 and its drive circuit can be excluded.

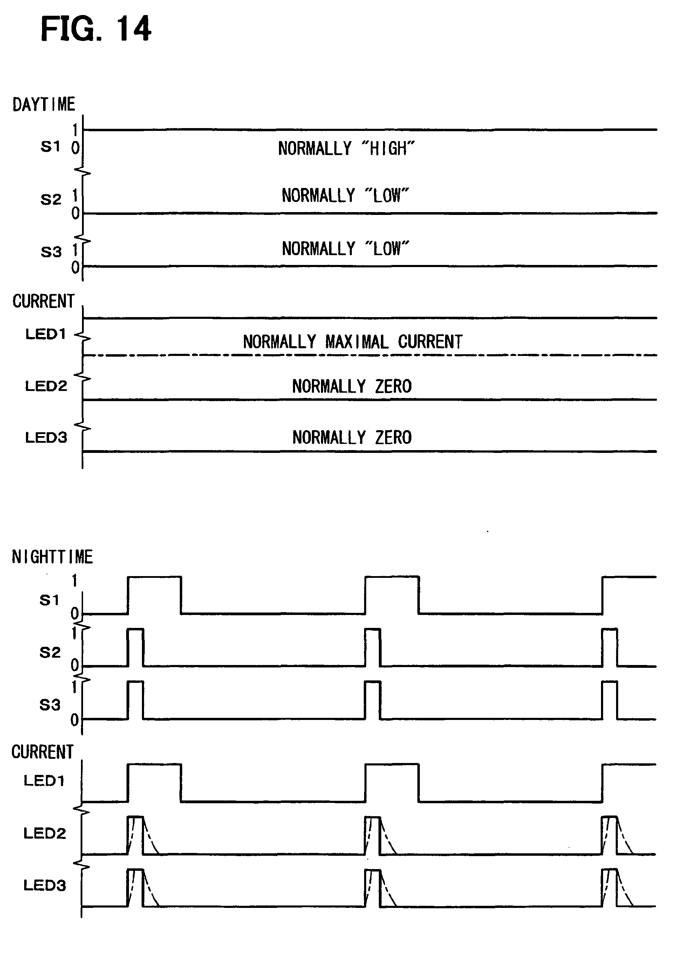

For providing the indicator light-emitting diode 103 with the capability of the illuminator light-emitting diode using the circuitry shown in FIG. 13, the indicator light-emitting diode 103 must be acted upon as shown in FIG. 14. Specifically, the daytime action is the same or similar to that shown in FIG. 11. When the signal S1 is driven high, the light-emitting diode LED1 is energized as an indicator to indicate an active state. In contrast, in the nighttime, since the indicator is dimmed relative to the daytime indication of the active state, the duty cycle of the signal S1 to be outputted is decreased in order to lower the luminance of the light-emitting diode LED1. Since light-emitting diodes associated with facilities that are turned off are brought to a nighttime illumination state, the duty cycle of the signals S2 and S3 to be outputted is made lower than that of the signal S1 in order to light the light-emitting diodes LED2 and LED3. The resistances of the current-limiting resistors and the duty cycles of the signals to be outputted are determined so that the luminance of a light-emitting diode attained when in the active state in the daytime, the luminance of a light-emitting diode attained when in the active state in the nighttime, and the luminance of a light-emitting diode when dimmed in the illumination state in the nighttime, or when turned off in the daytime will be lowered in that order.

However, the foregoing control has disadvantages as described below. Namely, although providing an indication requires a sufficient luminance to be seen in the daytime, the nighttime luminance of an illuminator should be determined in consideration of dark adaptation to such an extent that the illuminator will not glare. Specifically, the optimal luminance of a light-emitting diode that outputs light to be illuminated in connection with an active state in the nighttime or the optimal luminance of an illuminated light-emitting diode attained when turned off in connection with the illumination state in the nighttime can be established as follows. A value equal to or smaller than, for example, approximately 1/100 of the luminance output of the light-emitting diode that indicates an active state, that is, the luminance of the light-emitting diode attained when turned ON in the daytime is adopted. As long as the duty cycle of a signal is controlled, the pulse duration of a driving signal to be applied to the light-emitting diode LED2 or LED3 shown in FIG. 14 in the nighttime becomes very short. For example, when a pulse width modulation (PWM) type of pulse control method is adopted, the pulse duration is about 1/100 of one cycle of the signal. As the pulse duration of a signal with which a light-emitting diode is driven becomes shorter, a variation in luminance derived from a waveform deformation becomes larger. For example, when a pulse control signal employed associated with PWM control is inputted after being filtered in order to remove a radio noise and a surge whose frequencies are higher than the frequency of the signal, waveform broadening takes place in which the leading edge of the rectangular-wave pulse control signal is rounded and the trailing edge is elongated due to removal of the harmonics in the pulse control signal. Even when the pulse duration of a signal to be outputted remains unchanged, the length of the ON period within a cycle of switching processing during which the binary-coded signal has an ON-state voltage varies to cause a variation in luminance. The adverse effect of the waveform deformation is alleviated along with an increase in the pulse duration of the signal. However, when the pulse duration is widened under a condition that a mean luminance should remain constant, the cycle of a PWM control signal must be widened. In such a case, a limitation exists in widening the cycle, in that if the cycle of the PWM control signal is widened excessively, flashing of a light-emitting diode to which the signal is applied will result and is disadvantageously discerned as a flicker.

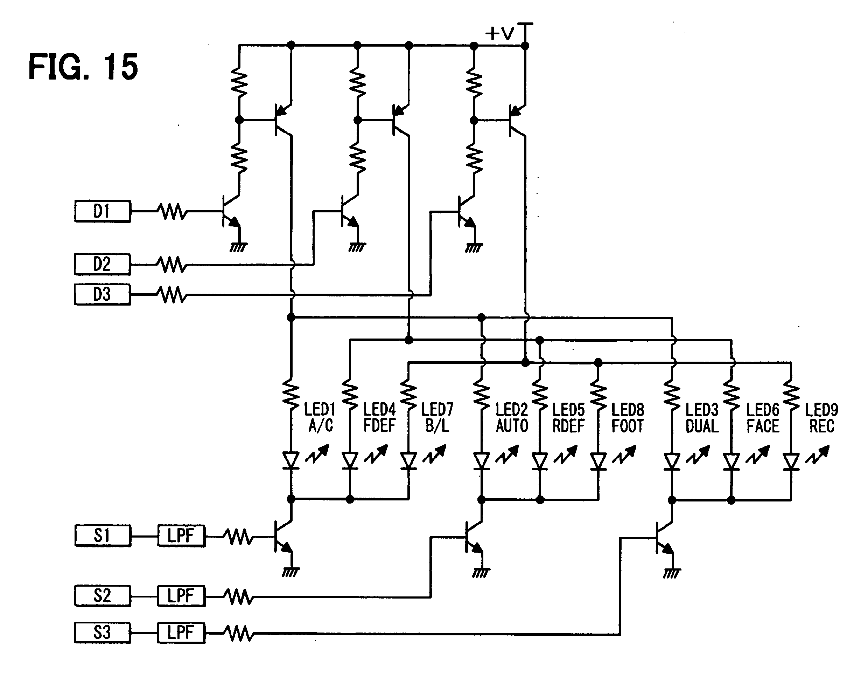

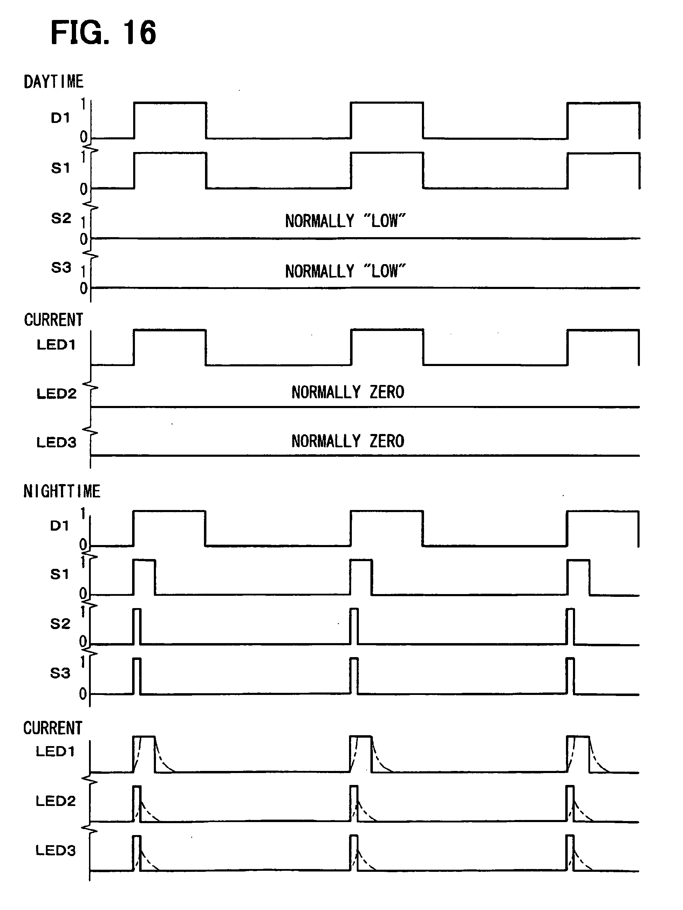

The foregoing disadvantage becomes more serious in a case where multiple light-emitting diodes on different lines in an operating panel having many indicators are dynamically driven on a time-division basis. FIG. 15 shows an example of a dynamic drive circuit to be used in a case where the number of signals to be multiplexed on the time-division basis is three. FIG. 16 shows illuminating actions driven by the circuit. Three light-emitting diodes on each of the lines can be independently driven with the signals S1, S2, and S3 respectively. Signals D1, D2, and D3 are successively driven high on the time-division basis, whereby the three lines are selectively connected to a power supply via associated transistors while occupying a one-third of an entire period, and thus made active. In such a case, the frequency of a PWM control signal for use in controlling a luminance should be equal to the active state selection frequency of the signals D1, D2, and D3 to be outputted on the time-division basis or should be an integral multiple of the frequency thereof.

FIG. 16 shows actions to be performed when the frequencies are equal to each other and the signal D1 is made active. As is apparent from the drawing, the duty cycle of the signal causing a light-emitting diode to output light at a maximal luminance decreases in inverse proportion to the number of signals to be multiplexed on a time-division basis. In the example shown in FIG. 16, the PWM-controlled pulse duration of the signal to be applied for the maximal luminance is as short as a one-third or about 33% of one cycle of the signal. In the daytime, the signal S1 remains high over the entire period during which power is fed under the control of the signal D1, and the light-emitting diode LED1 is energized at the maximal luminance to indicate the active state. However, in the nighttime, since the indicator is dimmed relative to daytime, the signal S1 is held high during part of the period, during which power is fed under the control of the signal D1, in order to lower the luminance of the light-emitting diode LED1. Namely, since the duty cycle of the signal to be applied for the maximum luminance is confined to the one-third of one cycle equivalent to a quotient of 1 divided by the number of signals to be multiplexed on a time-division basis, the pulse duration of a signal to be applied to dim the light-emitting diode in the nighttime is shortened to be a one-third of the pulse duration shown in FIG. 14. In such a case, the pulse duration of a signal to be applied in the nighttime to achieve an illumination state for the light-emitting diode that is turned OFF is especially short. As indicated with a dot-dash line in FIG. 16, an adverse effect of a waveform distortion becomes more serious.

The various inventive embodiments described herein are intended to provide an indicator drive system, unit or the like, that uses an indicator light source on one line to provide both an indication of an active state and an illumination state for a nighttime illuminator. The drive can prevent the duty cycle of a control signal from excessively decreasing even when light is adjusted to exhibit a low luminance, and can minimize a flicker and a variation in luminance.

In order to solve the above described disadvantages, an exemplary indicator drive system, unit or the like, is provided. The system includes an indicator light source connected on a main drive path leading to a drive power supply, a main circuit including a first switching element that is connected on the main drive path on the low-voltage side of the indicator light source, and that drives the indicator light source to switch the state thereof between indicating an active state and an illumination state in which the luminance of the indicator light source is dimmer or lower than that when indicating the active state, a branch drive path that branches out from a node between the indicator light source and first switching element on the main drive path into a ground side, and that serves as an auxiliary conduction path for the indicator light source when the first switching element enters a controlled state associated with the illumination state, and a nighttime dimming current-limiting load that limits a driving current which flows into the indicator light source over the branch drive path. A second switching element is inserted in series with the nighttime dimming current-limiting load on the branch drive path and controls conduction of electricity to the indicator light source over the branch drive path. A switch drive-and-control means drives and controls the switching elements so that, assuming that I_{DB} denotes the luminance of the indicator light source when indicating an active state in a daytime mode, I_{NB} denotes the luminance of the indicator light source when indicating an active state in a nighttime mode, and I_{ND} denotes the luminance of the indicator light source when in the illumination state, the relationship of I_{DB}>I_{NB}>I_{ND} will be established, and that, assuming η_{1DB} and η_{1NB} denote the duty cycles of a signal to be outputted to the first switching element in order to indicate the active state in the daytime mode and nighttime mode respectively, and η_{2DD} and η_{2ND} denote the duty cycles of a signal to be outputted to the second switching element in order to attain the illumination state in the daytime mode and nighttime mode respectively, the relationships of η_{1DB}>η_{1NB}, η_{2DD}<η_{2ND}, and η_{1NB}<η_{2ND} will be established. A drive mode switching means switches the drive mode for the indicator light source between the daytime mode and nighttime mode.

In various exemplary embodiments, the indicator light source is controlled to have the light thereof adjusted so that the daytime active state luminance I_{DB}, the nighttime active state luminance I_{NB}, the nighttime illumination state luminance I_{ND}, and the daytime illumination state luminance I_{DD}, which, during the daytime may be 0, are successively lower in the described order. It should be noted that the light adjustment control achieved by controlling the duty cycle of a control signal using not only the first switching element on the main drive path, but an additional element and path. In particular, it is noted that the branch drive path that branches out from the main drive path and has the nighttime dimming current-limiting load connected thereon is included in the adjustment control. For light adjustment in the nighttime, the indicator light source is driven through the second switching element over the branch drive path. Since the current capacity of the branch drive path is decreased due to the presence of the nighttime dimming current-limiting load, when the indicator light source is dimmed in the nighttime in the illumination state, the duty cycle η_{2ND} of the signal to be outputted in order to attain the low luminance I_{ND} can be increased. As a result, an indicator that provides the indication of the active state and a nighttime illuminator that provides illumination of the knob in the illumination state are realized by the indicator light source controlled on one line. Further, the duty cycle of a control signal, to be outputted in order to provide an adjustment to reduce the luminance of the indicator light source, which is dimmed in the nighttime to attain the illumination state, is prevented from being excessively small. A flicker and a variation in luminance can thereby be effectively suppressed.

The relationship between the luminance and the duty cycle of a signal to be outputted will be comprehensively explained using symbols listed in Table 1 for both a daytime mode and a nighttime mode during which the active state and the illumination state are attained. It should be noted that in the present specification, reference to the indicator light source being in the active state, refers to the indicator light source emitting light at a high luminance in order to indicate that the associated equipment is active or turned ON. When the indicator light source emits light at a low luminance in the nighttime mode or is illuminated in a manner to indicate that the associated equipment is turned OFF while providing a visual cue to the location of the operating knob, the indicator light source is referred to as being in the illumination state.

### Luminance

| | Active state | Illumination state |
|---|---|---|
| Daytime mode | I_{DB} | I_{DD} |
| Nighttime mode | I_{NB} | I_{ND} |

Duty cycle of a signal to be outputted

**Table 1**

| | | First switching element (S₁, S₂, S₃) | Second switching element (ILL) |
|---|---|---|---|
| Daytime Mode | Active state | η_{1DB} | η_{2DB} |
| | Illumination state | η_{1DD} | η_{2DD} |
| Nighttime mode | Active state | η_{1NB} | η_{2NB} |
| | Illumination state | η_{1ND} | η_{2ND} |

As an indicator light source, a light-emitting diode can be adopted. In such a case, a main current-limiting load that limits or otherwise optimizes the value of a current conducted to the light-emitting diode is connected on the main drive path over which a signal is outputted in order to light the light-emitting diode as an indicator at a high luminance in the daytime or nighttime modes. The main current-limiting load is generally a current-limiting resistor. As for the nighttime dimming current-limiting load, since light must be adjusted to be dimmed to a luminance for nighttime illumination, a voltage drop will be larger than that caused by the main current-limiting load. Assuming that a drive power supply is an onboard battery and power is received without intervention of a stabilization power circuit, a supply voltage level is likely to fluctuate greatly. If the nighttime dimming current-limiting load is realized with the current-limiting resistor alone, a variation in the luminance of the indicator light source illuminated in the nighttime becomes especially great. In such a case, if the nighttime dimming current-limiting load includes a current-limiting diode that causes a relatively stable voltage drop regardless of the variation in the supply voltage, the luminance of the indicator light source dimmed in the nighttime can be stabilized.

Even an indicator drive system in which indicator light sources are present on multiple lines may be dynamically driven on a time-division basis. Namely, in the main circuit, the multiple indicator light sources are connected in parallel with one another to the same first switching element, and multiple third switching elements connected in parallel with one another are interposed between the high-voltage side of the indicator light sources and the drive power supply in order to switch the connections of the indicator light sources to the drive power supply between an active state and an illuminated state. The switch drive-and-control means drives and controls the third switching elements so that one of the third switching elements will be selectively brought to the active state and the third switching elements to be brought to the active state will be successively switched on the time-division basis. The adoption of the branch drive path makes it possible to expand the duty cycle η_{2ND} of a signal to be outputted to attain a low luminance. Even when the duty cycle of the signal to be outputted is decreased due to the time division, the pulse duration of the driving signal can be retained at a certain value or more. A flicker and a variation in luminance can be suppressed. In such a case, since one of the multiple indicator light sources connected in parallel with one another is always selected due to the time-division control, the indicator light sources can share the branch drive path. Namely, the multiple indicator light sources connected in parallel with one another can be connected in common to the pair of the nighttime dimming current-limiting load and second switching element contributing to a decrease in the number of parts.

When the indicator light source included in the main circuit is energized in the nighttime mode, the first switching element is driven with a signal having a predetermined duty cycle η_{1NB}. However, the current-limiting load on the branch drive path is so large that even when the second switching element is normally driven, the luminance of the active indicator light source is not affected greatly. If the switch drive-and-control means is designed to drive and control the second switching element with a signal having normally a constant duty cycle η_{2ND} regardless of the driven state as an active state or illuminated state of the indicator light source of the main circuit in the nighttime mode, the control sequence in the nighttime mode for the second switching element can be greatly simplified. In particular, multiple main circuits in which the states of indicator light sources can independently be switched between an active state and an illuminated state are connected in parallel with one another while sharing the drive power supply. If the ground-side terminals of the branch drive paths of the respective main circuits are connected in common to the second switching element that is shared by the main circuits, the driven state of the second switching element can be uniquely determined regardless of the driven states of the first switching elements through which the indicator light sources are mutually individually driven contributing to further simplification of the control sequence.

In such a case, the switch drive-and-control means can be most readily designed to drive and control the second switching element so that the second switching element will normally conduct in the nighttime mode, that is, the duty cycle η_{2ND} will be equal to 100%.

In the daytime mode, actions are mainly performed via the first switching element over the main drive path over while high-luminance light adjustment is performed. Therefore, the switch drive-and-control means can drive and control the second switching element so that the second switching element will be normally open in the daytime mode, that is, the relation: η_{2DB} = η_{2DD} = 0% will be established. The control sequence for the second switching element can be simplified.

Especially, in the daytime, the position of an operating unit, including knobs into which the indicator light sources are built, can be easily determined due to the availability of external light. Illumination by the indicator light sources in the illumination state is not always needed. In such a case, the indicator light sources that are normally dimmed to the illumination state in the nighttime mode can be extinguished in the daytime mode. The switch drive-and-control means can drive and control the first switching element associated with the indicator light source in order to extinguish the indicator light source in the daytime mode, so that the first switching element will be normally open, that is, the duty cycle η_{DD} will be 0%.

The switch drive-and-control means can drive and control the first switching element by implementing PWM control at a predetermined frequency. In order to alleviate the adverse effect of a radio noise and a surge, a PWM control signal is filtered by a low-pass filter that has a cutoff frequency in a band higher than the PWM frequency, and then inputted to the first switching element. The first switching element is driven only with a control signal representing a small dimming ratio that implies an active state, that is, a PWM control signal or a continuous-level signal having a relatively long pulse duration. Therefore, even when the PWM control signal is filtered in order to remove a noise, the adverse effect of a distortion hardly poses a problem. In the present embodiment, adjustment of the luminance of the indicator light source in the illumination state in the nighttime mode, in which the dimming ratio is large, is not achieved by controlling the duty cycle of a signal to be applied through the first switching element over the main drive path that has a large current capacity. The adjustment of the luminance is achieved by controlling the duty cycle of a signal to be applied through the second switching element over the branch drive path whose current capacity is small, or by implementing static control through continuous conduction. Therefore, a control signal to be applied through the second switching element is also the PWM control signal or continuous-level signal having a long pulse duration. Even when the PWM control signal is filtered, adverse effects of distortion are reduced or eliminated. Adoption of various embodiments, even when filtering processing intended to cope with a radio noise or a surge is carried out, reduces or eliminates the adverse effect of a distortion on the control signal.

In an indicator drive system, unit, or the like, to which various embodiments are applied, multiple indicator light sources may be disposed in a translucent switch knob, and a manipulation detection unit may be included for detecting the manipulated state of the switch knob. Based on the driven states of a pair of a first switching element and second switching element, the multiple indicator light sources in the switch knob can be comprehensively driven and controlled. Even when multiple indicator light sources are disposed in a translucent switch knob, unlike a conventional arrangement, the indicator light sources are not classified into separate use as an indicator and as an illuminator. Each indicator light sources can be used as both an indicator and an illuminator, distributed as equivalent light sources to the switch knob, and then driven and controlled. The indicator light sources can uniformly light or illuminate the switch knobs.

### BRIEF DESCRIPTION OF THE DRAWINGS

Other objects, features and characteristics will be appreciated and become apparent to those of ordinary skill in the art and all of which form a part of the present application. In the drawings:
FIG. 1 is a diagram illustrating a first exemplary arrangement of switch knobs on an air-conditioner operating panel and actions of indicator light sources;
FIG. 2 is a diagram illustrating sectional views showing a first exemplary the positional relationship among a switch knob and indicator light sources;
FIG. 3 is a diagram illustrating sectional view showing a second exemplary positional relationship;
FIG. 4 is a schematic diagram illustrating a first embodiment of an exemplary indicator drive system;
FIG. 5 is a timing diagram illustrating exemplary operation of a circuit of FIG. 4 in a daytime mode and in a nighttime mode;
FIG. 6 is a diagram illustrating a second exemplary arrangement of switch knobs on the air-conditioner operating panel;
FIG. 7 is a circuit diagram showing a second embodiment of an exemplary indicator drive system;
FIG. 8 is a timing diagram illustrating exemplary operations of a circuit of FIG. 7 in a daytime mode and in a nighttime mode;
FIG. 9 is a schematic diagram illustrating a conventional indicator drive system;
FIG. 10 is a diagram illustrating sectional views of the positional relationships among a switch knob and indicator light sources to be established in a conventional circuit of FIG. 9;
FIG. 11 is a timing diagram illustrating exemplary operations of a conventional circuit of FIG. 9;
FIG. 12 is a diagram illustrating sectional views of the positional relationship established when one source is used as an indicator light source and as an illuminator light source;
FIG. 13 is a schematic diagram illustrating an exemplary indicator drive system adapted to an indicator light source of FIG. 12;
FIG. 14 is a timing diagram illustrating exemplary operations performed by a circuit, for example as shown in FIG. 13;
FIG. 15 is a circuit diagram illustrating an dynamic type indicator drive system; and
FIG. 16 is a timing diagram illustrating actions performed by a circuit, for example as shown in FIG. 15.

### (First Embodiment)

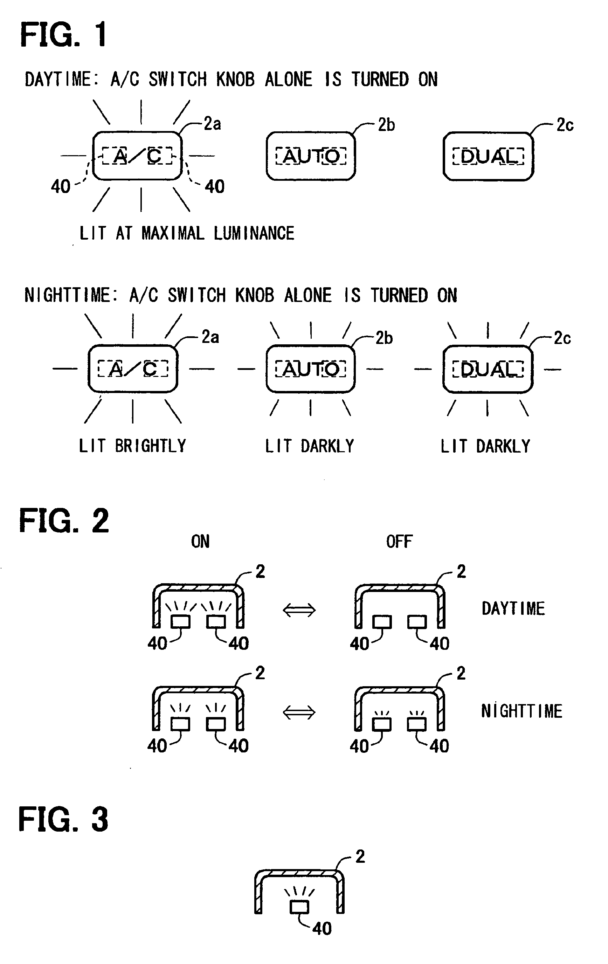

Referring to the drawings, various exemplary embodiments will be described below. FIG. 1 shows an example of arrangement of switch knobs to be driven by an indicator drive system. The switch knobs 2a, 2b, and 2c are disposed on an operating panel of an automobile air conditioner. Herein, three switch knobs of the A/C switch knob 2a, Auto switch knob 2b, and Dual switch knob 2c are shown. Each of the switch knobs 2a, 2b, and 2c has a translucent or light permeable part formed on the depressed surface side thereof so that the position of the manipulating part thereof can be discriminated in the nighttime or other times when exterior light is reduced. The light permeable part is formed as a transmissive illumination type manipulating part through which light emanating from light-emitting diodes 40 or indicator light sources disposed behind it will be transmitted therethough to the depressed surface side. Specifically, the switch knobs 2a, 2b, and 2c are made of a translucent resin, and the multiple light-emitting diodes 40 or a pair of right and left light-emitting diodes is, as shown in FIG. 2, disposed along the depressed surface of each of the switch knobs. However, as shown in FIG. 3, only one light-emitting diode 40 may be disposed in the switch knob 2.

When a facility associated with any of the switch knobs 2a, 2b, and 2c is started or turned on, or stopped or turned off, responsive to a manipulation performed on the switch knob, such as pressing manipulation, the light-emitting state of the light-emitting diodes 40 is changed between an active state, in which the light-emitting diodes 40 are illuminated at a relatively high level of luminance and associated with the ON state of the associated facility, and a dimmed or illumination state, in which the light-emitting diodes 40 are illuminated at a relatively low level of luminance associated with the OFF state. The light-emission control modes for the light-emitting diodes 40 relating to the active state and illumination state respectively are a daytime mode and a nighttime mode. For switching the modes, for example, a headlight switch typically accessible from a driver seat of an automobile, for example, a toggle switch attached to the distal end of a turn-signal level by the side of a steering wheel can be manipulated. When the headlight switch is set to a small-lamp lit position or a headlight lit position, the nighttime mode is designated. When the headlight switch is set to an off position, the daytime mode is designated.

As for the luminance of the light-emitting diodes 40 emitting light, assuming that I_{DB} denotes the luminance of the light-emitting diodes 40 in the active state in the daytime mode, I_{DD} denotes the luminance of the light-emitting diodes 40 in the illumination state in the daytime mode, I_{NB} denotes the luminance of the light-emitting diodes 40 in the active state in the nighttime mode, and I_{ND} denotes the luminance of the light-emitting diodes 40 in the illumination state in the nighttime mode, the luminance values are determined so that the relationship of I_{DB}>I_{NB}>I_{ND}>I_{DD} will be established. Namely, the luminance I_{DB} of the light-emitting diodes 40 in the active state in the daytime mode is set to the largest value so that in the daytime during which external light is intense, the active state can be discerned while overcoming the intense external light. The luminance I_{NB} of the light-emitting diodes 40 in the active state in the nighttime mode is set to a value, which ranges from about 10% of the I_{DB} value to about 3% thereof, in consideration of dark adaptation for fear the luminance of the switch knob may excessively glare in the nighttime or for fear the letters or symbols inscribed on the switch knob 2a, 2b, or 2c may be invisible. In the nighttime or any condition during which an amount of internal light is insufficient and headlights or small lamps are lit and the nighttime mode is activated as described above, the switch knobs 2a, 2b, and 2c are not extinguished but illuminated in an illumination state at a predetermined luminance in order to provide a visual notification of the locations of the switch knobs. The luminance I_{ND} of the light-emitting diodes 40 in the illumination state in the nighttime mode is set to a value smaller than the value of the luminance I_{NB} of the light-emitting diodes 40 in the active state in the nighttime mode is, or more particularly, to a value ranging from 30% of the I_{NB} value to 5% thereof so that the illumination state in the nighttime mode can be discriminated from the active state in the nighttime mode. Compared with the luminance I_{DB} of the light-emitting diodes 40 in the active state in the daytime mode, the luminance I_{ND} is set to a value ranging from about 3% of the I_{DB} value to about 0.5% thereof.

In the present embodiment, when the luminance I_{DD} of the light-emitting diodes 40 in the illumination state in the daytime mode is 0, that is, when an associated facility is stopped or turned off while the daytime mode is designated, the light-emitting diodes 40 are extinguished. However, for design registration, the luminance I_{DD} of the light-emitting diodes 40 in the illumination state in the daytime mode may be set to a value larger than zero and smaller than the value of the luminance of the light-emitting diodes 40 in the active state in the daytime mode. For example, the luminance I_{DD} of the light-emitting diodes 40 in the illumination state in the daytime mode may be set to a value larger than the value of the luminance I_{ND} of the light-emitting diodes 40 in the illumination state in the nighttime mode. The luminance I_{DD} of the light-emitting diodes 40 in the illumination state in the daytime mode may be set to a value larger than the value of the luminance I_{NB} of the light-emitting diodes 40 in the active state in the nighttime mode.

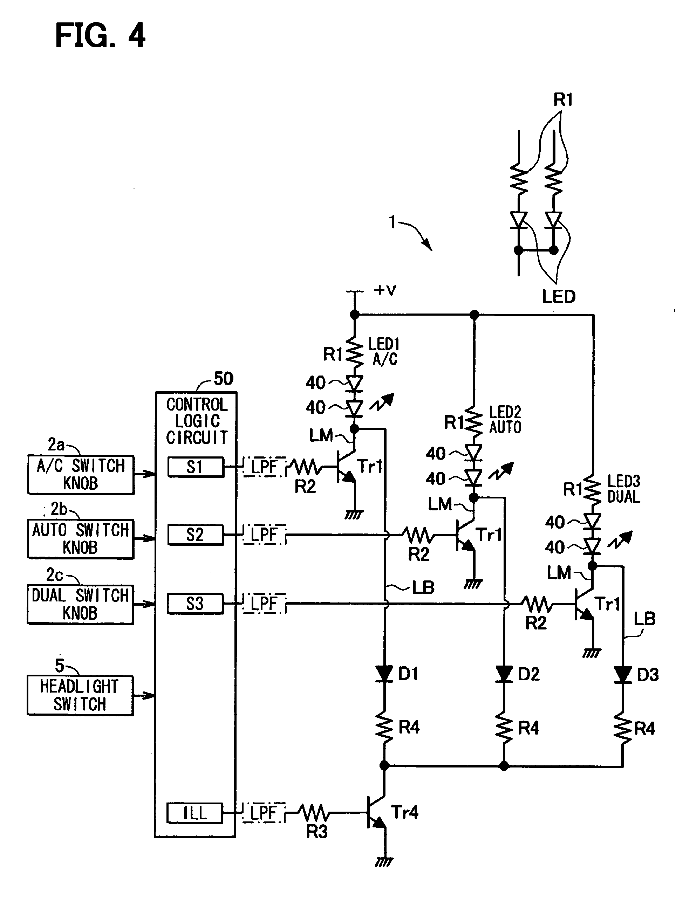

FIG. 4 shows an example of the circuitry of the indicator drive system 1. The light-emitting diodes LED1, LED2, and LED3 are connected on respective main drive paths LM leading to an onboard battery regarded as a drive power supply +V A current-limiting resistor R1 that optimizes the value of a current, which is conducted to each of the light-emitting diodes LED1, LED2, and LED3, is connected as a main current-limiting load in series with the light-emitting diode on the main drive path LM. A first switching element Tr1 that is formed with a transistor and that drives an associated one of the light-emitting diodes LED1, LED2, and LED3 so as to switch the active state of the light-emitting diode and the illumination state thereof in which the luminance of the light-emitting diode is lower than that in the active state is connected on the low-voltage side of the light-emitting diode on the main drive path LM.

As shown in FIG. 1 and FIG. 2, the multiple light-emitting diodes 40 are disposed in the translucent switch knob 2. The multiple light-emitting diodes 40 incorporated in the same switch knob 2 are, as shown in FIG. 4, inserted to the main drive path LM in series with each other while sharing the same current-limiting resistor R1. However, as shown in the upper part of FIG. 4, multiple pairs of the light-emitting diode LED and current-limiting resistor R1 connected in series with each other may be inserted into the main drive path LM in parallel with one another.

A branch drive path LB branches out from a node on each of the main drive paths LM between each of the light-emitting diodes LED1, LED2, and LED3 and each of the first switching elements Tr1 to a ground side. When the first switching element Tr1 is brought to a controlled state associated with the illumination state, the branch drive path LB acts as an auxiliary conduction path for the light-emitting diode LED1, LED2, or LED3. A nighttime dimming current-limiting load D3-R4 that limits a driving current flowing over the branch drive path LB is connected on the branch drive path LB. The nighttime dimming current-limiting load D3-R4 is composed of a current-limiting diode D3 and a current-limiting resistor R4. The circuit constant is determined so that an entire voltage drop occurring under the condition that an applied supply voltage should remain unchanged will be larger than that caused by the current-limiting resistor R1, which serves as a main current-limiting load, on the main drive path LM. The light-emitting diode LED1, LED2, or LED3, current-limiting resistor R1, first switching element Tr1, and nighttime dimming current-limiting load D3-R4 constitute a main circuit.

A second switching element Tr4 that is formed with a transistor and controls conduction of electricity to the light-emitting diodes LED over the branch drive paths LB is connected in common to the branch drive paths LB while being inserted in series with the nighttime dimming current-limiting loads D3-R4. The light-emitting diodes LED1, LED2, and LED3 in the respective switch knobs 2a, 2b, and 2c (FIG. 1) are allocated to three equivalent main circuits respectively, and have the states thereof individually switched between the active state and illumination state. The main circuits are connected in parallel with one another while sharing the same drive power supply +V. The ground-side terminals of the branch drive paths LB branching out the respective main circuits are connected in common to the second switching element Tr4 shared by the main circuits. However, the second switching element Tr4 may be included in each of the main circuits.

The first switching elements Tr1 of the main circuits and the driving signal input terminal of the second switching element Tr4 shared by the main circuits are connected to a control logic circuit 50 responsible for drive and control of the switching elements. Herein, the driving signal input terminal of the second switching element Tr4 is the base of a bipolar transistor. When an FET is employed, the driving signal input terminal is the gate thereof. Reference numeral R2 denotes an input regulation resistor. The control logic circuit 50 is formed with a microcomputer or a dedicated IC logic circuit. Manipulation detection units 2a to 2c that detect the manipulated states of the respective switch knobs 2a, 2b, and 2c and that are formed with, for example, single-pole double-throw (SPDT) switches, which select a signal power supply or a ground, or momentary switches, and the headlight switch 5 are connected to the control logic circuit 50.

When the headlight switch 5 is set to the small lamp-lit position or headlight-lit position, the control logic circuit 50 designates the nighttime mode. When the headlight switch 5 is set to the off position, the control logic circuit 50 designates the daytime mode. The control logic circuit 50 switches the state of the light-emitting diode LED1 between the active state and the illumination state according to the on or OFF state of the switch knob 2a, switches the state of the light-emitting diode LED2 according to the on or OFF state of the switch knob 2b, and switches the state of the light-emitting diode LED3 according to the on or OFF state of the switch knob 2c.

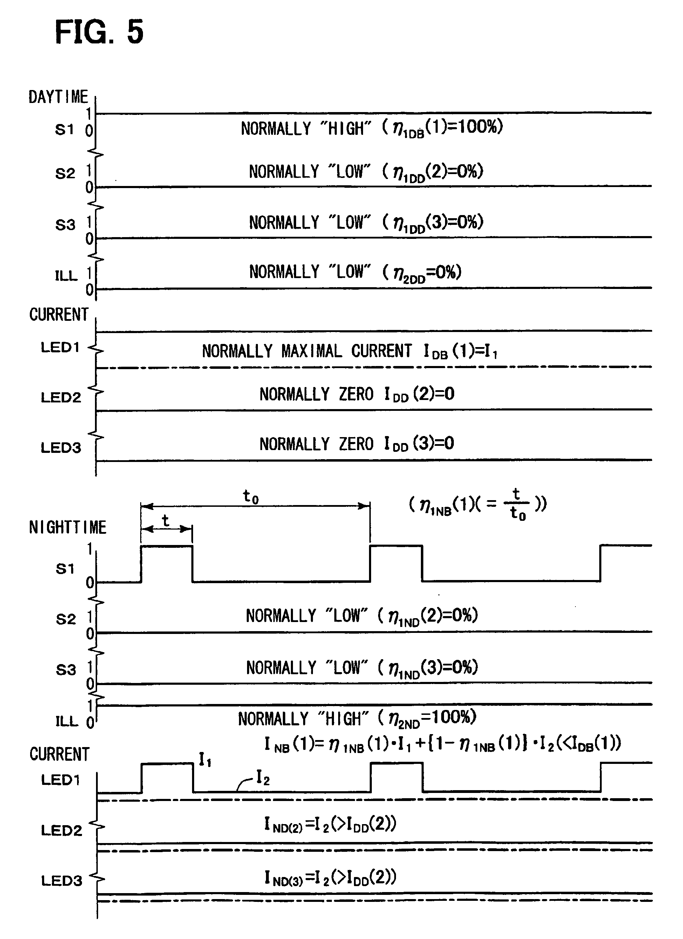

Referring to the timing chart of FIG. 5, the controlled forms of the first switching elements Tr1 and second switching element Tr2 in the daytime mode and nighttime mode will be described below. FIG. 5 exemplifies a case where the light-emitting diode LED1 associated with the A/C switch 2a is energized, and the light-emitting diode LED2 associated with the Auto switch 2b and the light-emitting diode LED3 associated with the Dual switch 2c are dimmed.

### (1) Daytime mode

In the daytime mode, the second switching element Tr4 is normally off and driving using the branch drive path LB is not carried out. Both the duty cycle η_{2DB} and duty cycle η_{2DD} of a signal to be outputted to the second switching element Tr4 in order to attain the active state or illumination state are 0%. The light-emitting diode is driven through the first switching element Tr1 over the main drive path LM alone. The action of the first switching element Tr1 in each of the states will be described below. In FIG. 5, a numeral in parentheses following the duty cycle of a signal to be outputted to the first switching element Tr1 indicates any of the light-emitting diodes LED1, LED2, and LED3.

In the active state, or more particularly, when the light-emitting diode LED1 is energized and a control signal S1 is outputted, the first switching element Tr1 is normally on, that is, the duty cycle η_{1DB}(1) of the signal S1 to be outputted is normally 100%. The light-emitting diode LED1 is continuously lit, and the luminance thereof is maximal.

In the illumination state, or more particularly, when the light-emitting diodes LED2 and LED3 are dimmed and control signals S2 and S3 are outputted, the first switching elements Tr1 are normally off, that is, the duty cycles η_{1DB}(2) and η_{1DB}(2) of the signals S2 and S3 to be outputted are 0%. The second switching element Tr4 is off. The light-emitting diodes LED2 and LED3 are extinguished.

### (2) Nighttime mode

In the nighttime mode, the second switching element Tr4 is normally on. A drive form using both the main drive path LM and branch drive path LB is set up. Specifically, the duty cycles η_{2NB} and η_{2ND} of a signal to be outputted to the second switching element Tr4 in order to attain the active state or the illumination state are 100%. The actions of the first switching element Tr1 performed in both the active state and the illumination state will be described below.

In the active state of the nighttime mode, or more particularly, when the light-emitting diode LED1 is energized and the control signal S1 is outputted, the light-emitting diode LED1 is driven with the signal having the duty cycle η_{1NB}(1) approximately 23% in FIG. 5, at a predetermined frequency equal to or larger than, for example, 180 Hz and equal to or smaller than 1.5 kHz, through PWM control-based switching. When the first switching element Tr1 is turned on, the light-emitting diode LED1 is driven with a current I₁ over the main drive path LM and branch drive path LB. When the first switching element Tr1 is turned off, the light-emitting diode LED1 is driven with a current I₂ having a value smaller than the value I₁, over the branch drive path LB. A mean current value I_{NB}(1) is expressed as follows I_{NB}(1) = η_{1NB}(1) ·I₁ + {1-η_{1NB}(1)} · I₂. When I₁<I₂ is established, the second term can be ignored. Namely, the light-emitting diode is dimmed η_{1NB}(1) times more greatly than the illuminations for the daytime.

In the illumination state of the nighttime mode, or more particularly, when the light-emitting diodes LED2 and LED3 are dimmed and the control signals S2 and S3 are outputted, the first switching elements Tr1 are normally off, that is, the duty cycle η_{1NB}(2) of the signals to be outputted is 0%. In contrast, the second switching element Tr4 is normally on, that is, the duty cycle η_{2DB} of a signal to be outputted is 100%. The light-emitting diodes LED2 and LED3 are continuously lit while having a current limited to the current I₂ by the nighttime dimming current-limiting loads D3-R4. The circuit constant of the nighttime dimming current-limiting load D3-R4 is determined so that I₂<I_{NB}(1) will be established.

In the illumination state in the nighttime mode, the light-emitting diode LED is not controlled by controlling the duty cycle of a signal outputted to the first switching element Tr1 on the main drive path LM over which the light-emitting diode LED is driven and controlled to be in the active state in the daytime mode or nighttime mode. Instead, the light-emitting diode LED is driven to be continuously lit with a current limited by the nighttime dimming current-limiting load D3-R4 on the branch drive path LB. As a result, although the light-emitting diode on one line is used both as an indicator and as a nighttime illuminator, the duty cycle of a control signal to be outputted in order to adjust light emitted from the light-emitting diode so that the luminous of the dimmed light-emitting diode will be low in the nighttime will not be too small. In FIG. 5, the duty cycle η_{2DB} of the control signal to be outputted is 100%. Eventually, a flicker and a variation in luminance can be effectively suppressed.

The PWM control signals S1, S2, and S3 to be outputted to the first switching elements Tr1 are filtered by low-pass filters LPF having cutoff frequencies in frequency bands higher than the frequencies of the control signals, and then applied to the first switching elements Tr1. Therefore, the adverse effect of a radio noise and a surge can be alleviated. A control signal PLL to be outputted to the second switching element Tr4 is filtered by the same low-pass filter LPF, and then applied to the second switching element Tr4. However, the control signal PLL is not a pulse-control signal to be used to implement PWM control, but is a level signal that is driven low for the daytime mode and driven high for the nighttime mode. The control signal PLL is therefore left unaffected by a distortion caused by filtering. The low-pass filters LPF may be formed as, for example, known passive filters. As long as the low-pass filters can exert the effect of blocking a noise whose frequency is equal to or higher than a certain frequency, the low-pass filters may have the simple circuitry including only a bypass capacitor or a choke coil.

For design registration, when the light-emitting diode, that is, the indicator light source is in the illumination state in the daytime mode, the light-emitting diode may be allowed to emit light at a lower luminance than when it is energized in the daytime mode. If the second switching element Tr4 is normally broken in the daytime mode, when the light-emitting diode is energized or in the illumination state in the daytime mode, light to be emitted from the light-emitting diode is adjusted by controlling the duty cycle of a control signal to be outputted to the first switching element Tr1. Specifically, the luminance I_{DD} of the light-emitting diode in the illumination state in the daytime mode can be made higher than the luminance I_{ND} of the light-emitting diode in the illumination state in the nighttime mode. In such a case, the relation expressed by η_{1DD}>η_{1ND} is established. The luminance I_{DD} of the light-emitting diode in the illumination state in the daytime mode can be made higher than the luminance I_{NB} of the light-emitting diode in the active state in the nighttime mode. In such a case, the relation expressed by η_{1DD}>η_{1NB} is established.

In order to customize the luminance of the light-emitting diode, that is, the indicator light source in the illumination state in the nighttime, the duty cycle η_{2ND} of a control signal to be outputted to the second switching element Tr4 is set to a value that falls below 100% but is not equal to or smaller than the duty cycle η_{1NB} of a control signal to be outputted to the first switching element Tr1 in order to attain the active state in the nighttime mode. PWM control may then be implemented. A fluctuation in a supply voltage may be detected. PWM control may then be implemented so that the duty cycle η_{2ND} of the control signal will get larger along with a decrease in the supply voltage. Thus, the luminance of the light-emitting diode, that is, the indicator light source in the illumination state in the nighttime may be stabilized.

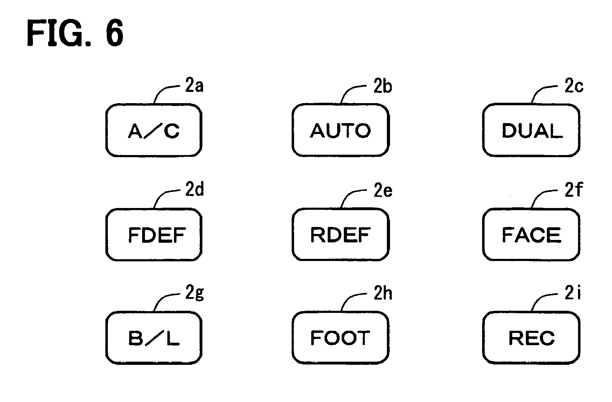

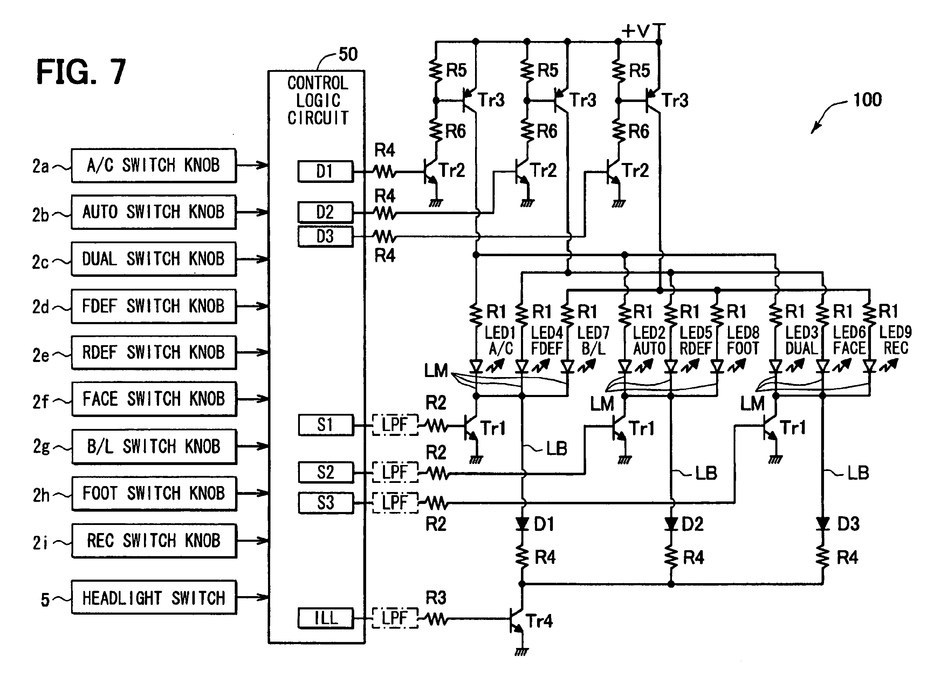

The indicator drive system may be designed to dynamically drive light-emitting diodes on multiple lines on a time-division basis. As shown in FIG. 6, the sum total of switch knobs is expanded to be three times larger than that shown in FIG. 4. In an alternative embodiments, for example, as shown in FIG. 7, light-emitting diodes LED1, LED2, LED3, LED4, LED5, LED6, LED7, LED8, and LED9 are incorporated in nine switch knobs 2a, 2b, 2c, 2d, 2e, 2f, 2g, 2h, and 2i respectively.

The circuitry is based on the circuitry shown in FIG. 4. In each main circuit, multiple light-emitting diodes LED1 to LED3, LED4 to LED6, or LED7 to LED9 are connected in parallel with one another to the same first switching element Tr1. Third switching elements Tr2 and Tr3 that switch the connection of the light-emitting diodes LED and a drive power supply +V between an active state and an inactive state are connected between the light-emitting diodes LED1 to LED3, LED4 to LED6, or LED7 to LED9 and the drive power supply +V on the high-voltage side of the light-emitting diodes.

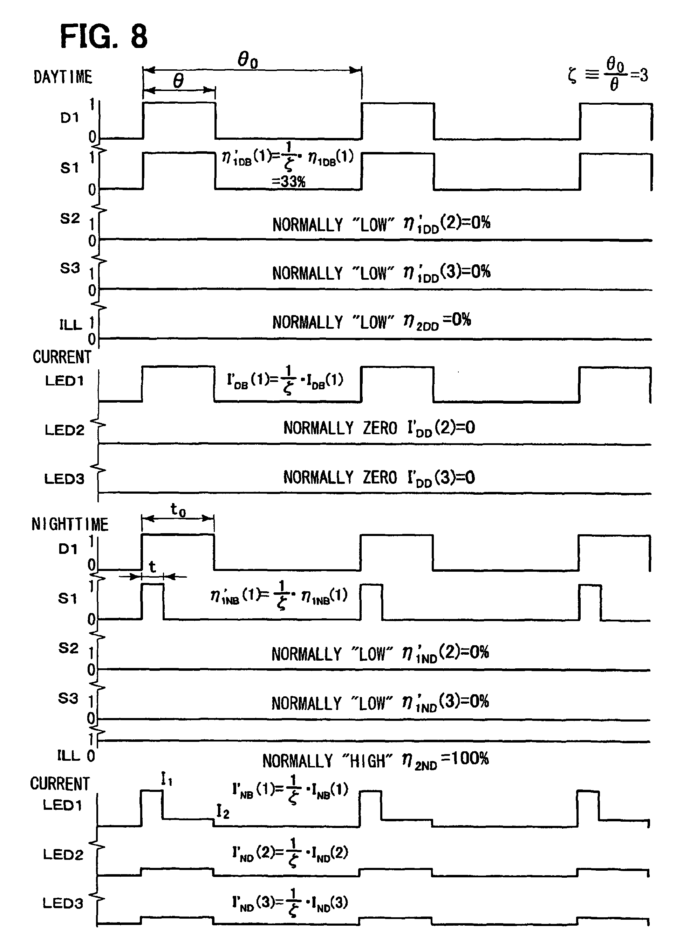

The third switching elements Tr2 and Tr3 are formed with a signal input transistor Tr2 and a drive transistor Tr3. The signal input transistor Tr2 is connected to a control logic circuit 50 via an input regulation resistor R4. The output voltage of the signal input transistor Tr2 is inputted to the drive transistor Tr3 while being divided or regulated by resistance half-bridges R5 and R6. The control logic circuit 50, acting as a switch drive-and-control means, drives and controls the drive transistors Tr3 so that any of the drive transistors Tr3 will be selectively brought to an active state responsive to input of the control signal D1, D2, or D3 to the signal input transistor Tr2. The drive transistors Tr3 to be put to the active state will be successively switched on a time-division basis. As shown in FIG. 8, the number of signals ζ to be multiplexed on the time-division basis is three. The frequency of a control signal to be used for PWM control and outputted to the first switching element Tr1 for the light-emitting diode is determined to be equal to the active state selection frequency of the control signals D1, D2, and D3 to be inputted on the time-division basis.

It should be noted that, in accordance with various embodiments, one of the multiple light-emitting diodes LED1 to LED3, LED4 to LED6, and LED7 to LED9, which are connected in parallel with one another, is always selected through time-division control. The light-emitting diodes LED1 to LED3, LED4 to LED6, or LED7 to LED9 share a branch drive path LB. Namely, the multiple light-emitting diodes LED1 to LED3, LED4 to LED6, or LED7 to LED9 connected in parallel with one another are connected in common to a pair of a nighttime dimming current-limiting load D3-R4 and a second switching element Tr4.

Since the control signals D1, D2, and D3 are successively driven high on the time-division basis while occupying a one-third of an entire period, the associated pairs of third switching elements Tr2 and Tr3 are selectively turned on, and the three light-emitting diodes LED1 to LED3, LED4 to LED6, or LED7 to LED9 on each of three lines are connected to the power supply +V and thereby made active. FIG. 8 exemplifies a state in which the light-emitting diodes LED1 to LED3 are made active. The actions of the first switching element Tr1 and second switching element Tr during the active-state period are basically identical to those in the circuitry shown in FIG. 4. However, the effective duty cycles η'_{DD} and η'_{ND} of a control signal with which the first switching element Tr1 is driven are 1/ζ, or more particularly, 1/3 of the duty cycles η_{DD} and η_{ND} respectively employed in the circuitry shown in FIG. 4. Therefore, even when the light-emitting diode is energized in the daytime at the maximal luminance, the light-emitting diode is driven according to the PWM control method in which the control signal to be outputted to the first switching element Tr1 is controlled to have the duty cycle η'_{DB} of 33%.

Even when the light-emitting diode is in the illumination state in the nighttime mode, the second switching element Tr4 is not normally on, but the light-emitting diode is driven according to the PWM control method in which the control signal to be outputted to the second switching element Tr4 is controlled to have the duty cycle η'_{ND} of 33%. However, since the second switching element Tr4 remains on over the entire active-state period during which the light-emitting diodes are made active on the time-division basis, the pulse duration of the driving signal is wider than that shown in FIG. 16 and employed in the related art. Therefore, a flicker and a variation in luminance can be suppressed. Even when a radio noise and a surge are removed by the low-pass filter LPF, very little waveform distortion occurs.

It will be appreciated that instead of driving a light-emitting diode (40) using PWM control-based switching so that the light-emitting diode (40) will be lit in the nighttime mode, adoption of a method of continuously driving the light-emitting diode (40) with a current whose value is larger than that of a current fed when the light-emitting diode (40) is dimmed in the nighttime mode is conceivable.

In such a scenario however, involving continuous drive of the light-emitting diode, another switching element must be added leading to an increase in a cost or an increase in an installation area. Therefore such a method not considered a best method. Rather, in accordance with various embodiments, when the light-emitting diode is lit in the nighttime mode, the light-emitting diode is driven through PWM control-based switching in order to minimize such increases.

## Claims

1. An indicator drive system comprising:
an indicator light source (40) connected on a main drive path (LM) leading to a drive power supply (+V);
a main circuit including a first switching element (Tr1) connected on the main drive path (LM) on the low-voltage side of the indicator light source (40), the first switching element (Tr1) switching the state of the indicator light source (40) between a active state having an active luminance and a illumination state having an illumination luminance lower than the active luminance, a branch drive path (LB) that branches from a node on the main drive path (LM) between the indicator light source (40) and the first switching element (Tr1) to a ground side, the branch drive path (LB) functioning as an auxiliary conduction path for the indicator light source (40) when the first switching element (Tr1) is brought to a controlled state associated with the illumination state, a nighttime dimming current-limiting load (D1-D3, R4) connected on the branch drive path (LB), the nighttime dimming current-limiting load (D1-D3, R4) limiting a driving current to be fed to the indicator light source (40) over the branch drive path (LB);
a second switching element (Tr4) inserted in series with the nighttime dimming current-limiting load (D1-D3, R4) on the branch drive path (LB), the second switching element (Tr4) controlling conduction of electricity to the indicator light source (40) over the branch drive path (LB);
a switch drive-and-control means (50) for driving and controlling the switching elements to establish a relation of I_{DB}>I_{NB}>I_{ND}, where I_{DB} denotes the active luminance of the indicator light source (40) in the active state in a daytime mode, I_{NB} denotes the active luminance of the indicator light source (40) in the active state in a nighttime mode, and I_{ND} denotes the illumination luminance of the indicator light source (40), and
a drive mode switching means (5) that switches the drive mode for the indicator light source (40) between the daytime mode and nighttime mode;
**characterized in that**
the switch drive-and-control means (50) for driving and controlling the switching elements to establish a relation η_{1DB}> η_{1NB}, η_{2DD}< n_{2ND}, and η_{1NB}< η_{2ND}, where η_{1DB} denotes a duty cycle of a first signal to be output to the first switching element (Tr1) to attain the active luminance in the daytime mode, η_{1NB} denotes the duty cycle of the first signal to be output to the first switching element (Tr1) to attain the active luminance in the nighttime mode, and where η_{2DD} denotes a duty cycle of a second signal to be output to the second switching element (Tr4) to attain the illumination luminance in the daytime mode and η_{2ND} denotes the duty cycle of the second signal to be output to the second switching element (Tr4) in order to attain the illumination state in the nighttime mode, and being further for driving and controlling the second switching element (Tr4) to be normally open in the daytime mode; and said indicator drive system comprises means to control the luminance (I_{DD}) in the illumination state in the daytime mode is able to be made higher than the luminance (I_{ND}) in the illumination state in the nighttime mode, in this case the relation η_{1DD}> η_{1ND} is established, and means to control the luminance (I_{DD}) in the illumination state in the daytime mode is able to be made higher than the luminance (I_{NB}) in the active state in the nighttime mode, in this case the relation η_{1DD}> η_{1NB} is established,
where η_{1DD} denotes a duty cycle of the first signal to be output to the first switching element (Tr1) to attain the illumination luminance in the daytime mode, η_{1ND} denotes the duty cycle of the first signal to be output to the first switching element (Tr1) to attain the illumination luminance in the nighttime mode..

2. The indicator drive system according to Claim 1, wherein the indicator light source (40) includes a light-emitting diode (40), a main current-limiting load (R1) that limits the value of a current to be conducted to the light-emitting diode (40) is connected on the main drive path (LM), and a voltage drop caused by the nighttime dimming current-limiting load (D1-D3, R4) is larger than that caused by the main current-limiting load (R1).

3. The indicator drive system according to Claim 2, wherein the drive power supply (+V) is an onboard battery, and the nighttime dimming current-limiting load (D1-D3, R4) includes a current-limiting diode (D1-D3).

4. The indicator drive system according to any of Claims 1 to 3, wherein:
the main circuit further includes a plurality of indicator light sources (40) connected in parallel with one another to the first switching element (Tr1), and to a plurality of third switching elements (Tr2, Tr3) interposed between the high-voltage side of the indicator light sources (40), which are connected in parallel with one another, and the drive power supply (V+) the plurality of third switching elements (Tr2, Tr3) switching the connections of the indicator light sources (40) on and off to the drive power supply (V+) between an active state and an inactive state; and
the switch drive-and-control means (50) is further for driving and controlling the plurality of third switching elements (Tr2, Tr3) so that each one of the plurality of third switching elements (Tr2, Tr3) is successively switched on a time-division basis so as to be selectively brought to the active state.

5. The indicator drive system according to Claim 4, wherein the plurality of indicator light sources (40) are further connected in common to the nighttime dimming current-limiting load (D1-D3, R4) and the second switching element (Tr4).

6. The indicator drive system according to any of Claims 1 to 5, wherein the switch drive-and-control means (50) is further for driving and controlling the second switching element (Tr4) with a signal having normally a constant duty cycle η_{2ND} regardless of the driven state of the indicator light source (40) of the main circuit in the nighttime mode.

7. The indicator drive system according to Claim 6, wherein:
a plurality of main circuits in which the states of the indicator light sources (40) can be independently switched between the active state and illumination state are connected in parallel with one another and are connected in common to the drive power supply (+V); and
the ground-side terminals of the branch drive paths (LB) of the respective main circuits are connected in common to the second switching element (Tr4) that is shared by the main circuits.

8. The indicator drive system according to Claim 6 or 7, wherein the switch drive-and-control means is further for driving and controlling the second switching element (Tr4) to normally conduct in the nighttime mode.

9. The indicator drive system according to any of Claims 1 to 8, wherein the switch drive-and-control means (50) is further for driving and controlling the first switching element (Tr1) associated with the indicator light source (40) extinguished in the daytime mode to be normally open.

10. The indicator drive system according to any of Claims 1 to 9, wherein:
the switch drive-and-control means (50) is further for driving and controlling the first switching element (Tr1) using a pulse width modulation (PWM) control signal having a predetermined frequency; and
the PWM control signal is inputted to the first switching element (Tr1) after the PWM control signal is filtered by a low-pass filter (LPF) having a cutoff frequency in a frequency band higher than the predetermined frequency.

11. The indicator drive system according to any of Claims I to 10, wherein:
a plurality of the indicator light sources (40) are incorporated in a translucent switch knob (2a-2c) including a manipulation detection unit (2a-2c) that detects the manipulated state of the translucent switch knob (2a-2c);
based on respective driving states of the first switching element (Tr1) and second switching element (Tr4), the plurality of indicator light sources (40) in the switch knob (2a-2c) are driven and controlled.

## Patentansprüche

1. Anzeigeansteuersystem, aufweisend:
eine Anzeigelichtquelle (40), die mit einem Hauptansteuerpfad (LM) verbunden ist, der zu einer Ansteuerleistungsquelle (+V) führt;
einen Hauptschaltkreis mit einem ersten Schaltelement (Tr1), das an den Hauptansteuerpfad (LM) auf der Niedervoltseite der Anzeigelichtquelle (40) angeschlossen ist, wobei das erste Schaltelement (Tr1) den Zustand der Anzeigelichtquelle (40) zwischen einem Aktivzustand mit einer Aktivluminanz und einem Beleuchtungszustand mit einer Beleuchtungsstärken-Luminanz, die niedriger ist als die Aktivluminanz, umschaltet,
einen Zweigansteuerpfad (LB), der von einem Knotenpunkt auf dem Hauptsteuerpfad (LM) zwischen der Anzeigelichtquelle (40) und dem ersten Schaltelement (Tr1) auf eine Erdungsseite abzweigt, wobei der Zweigsteuerpfad (LB) als Hilfsleitpfad für die Anzeigelichtquelle (40) fungiert, wenn das erste Schaltelement (Tr1) in einen gesteuerten Zustand gebracht wird, der mit dem Beleuchtungszustand zusammenhängt,
eine nächtlich abblendende Strombegrenzungslast (D1-D3, R4), die auf dem Zweigansteuerpfad (LB) verbunden ist, wobei die nächtlich abblendende Strombegrenzungslast (D1-D3, R4) einen Steuerstrom begrenzt, der der Anzeigelichtquelle (40) über den Zweigansteuerpfad (LB) zuzuführen ist;
ein zweites Schaltelement (Tr4), das mit der nächtlich abblendenden Strombegrenzungslast (D1-D3, R4) auf dem Zweigansteuerpfad (LB) in Reihe geschaltet ist, wobei das zweite Schaltelement (Tr4) die Leitung der Elektrizität an die Anzeigelichtquelle (40) über den Zweigansteuerpfad (LB) steuert;
eine Ansteuer-und-Steuer-Schaltvorrichtung (50) zur Ansteuerung und Steuerung der Schaltelemente, um ein Verhältnis I_{DB}>I_{NB}>I_{ND} herzustellen, wobei I_{DB} die Aktivluminanz der Anzeigelichtquelle (40) in dem Aktivzustand in einem Tagmodus, I_{NB} die Aktivluminanz der Anzeigelichtquelle (40) in dem Aktivzustand in einem Nachtmodus und I_{ND} die Beleuchtungsstärken-Luminanz der Anzeigelichtquelle (40) bezeichnet, und
eine Ansteuermodus-Schaltvorrichtung (5), die den Ansteuermodus für die Anzeigelichtquelle (40) zwischen dem Tagmodus und dem Nachtmodus umschaltet;
**dadurch gekennzeichnet, dass**
die Ansteuer-und-Steuer-Schaltvorrichtung (50) zur Ansteuerung und Steuerung der Schaltelemente ein Verhältnis η_{1DB}>η_{1NB}, η_{2DD}<η_{2ND} und η_{1NB}<η_{2ND} herstellt, wobei η_{1DB} ein Einschaltverhältnis eines ersten Signals, das an das erste Schaltelement (Tr1) auszugeben ist, um die Aktivluminanz in dem Tagmodus zu erreichen, η_{1NB} das Einschaltverhältnis des ersten Signals, das an das erste Schaltelement (Tr1) auszugeben ist, um die Aktivluminanz in dem Nachtmodus zu erreichen und η_{2DD} ein Einschaltverhältnis eines zweiten Signals, das an das zweite Schaltelement (Tr4) auszugeben ist, um die Beleuchtungsstärken-Luminanz in dem Tagmodus zu erreichen und η_{2ND} ein Einschaltverhältnis des zweiten Signals, das an das zweite Schaltelement (Tr4) auszugeben ist, um den Beleuchtungszustand in dem Nachtmodus zu erreichen, bezeichnet, und dass sie außerdem das zweite Schaltelement (Tr4) so ansteuert und steuert, dass es normalerweise in dem Tagmodus geöffnet ist; und das Anzeigeansteuersystem weiter aufweist
ein Mittel zur Steuerung der Luminanz (I_{DD}) in dem Beleuchtungszustand in dem Tagmodus, die höher eingestellt werden kann als die Luminanz (I_{ND}) in dem Beleuchtungszustand in dem Nachtmodus, wobei in diesem Fall das Verhältnis η_{1DD}>η_{1ND} hergestellt wird, und
ein Mittel zur Steuerung der Luminanz (I_{DD}) in dem Beleuchtungszustand in dem Tagmodus, die höher eingestellt werden kann als die Luminanz (I_{NB}) in dem Aktivzustand in dem Nachtmodus, wobei in diesem Fall das Verhältnis η_{1DD}>η_{1NB} hergestellt wird,
und wobei η_{1DD} ein Einschaltverhältnis des ersten Signals, das an das erste Schaltelement (Tr1) auszugeben ist, um die Beleuchtungsstärken-Luminanz in dem Tagmodus zu erreichen und η_{1ND} das Einschaltverhältnis des ersten Signals, das an das erste Schaltelement (Tr1) auszugeben ist, um die Beleuchtungsstärken-Luminanz in dem Nachtmodus zu erreichen, bezeichnet.

2. Anzeigeansteuersystem nach Anspruch 1, wobei die Anzeigelichtquelle (40) eine lichtemittierende Diode (40) und eine Haupt-Strombegrenzungslast (R1), die die Stromstärke, die einer lichtemittierenden Diode (40) zugeführt wird, begrenzt und die auf dem Hauptansteuerpfad (LM) verbunden ist, aufweist und außerdem ein Spannungsabfall, der von der nächtlich abblendenden Strombegrenzungslast (D1-D3, R4) verursacht wird, größer ist als der, der von der Haupt-Strombegrenzungslast (R1) verursacht wird.

3. Anzeigeansteuersystem nach Anspruch 2, wobei die Ansteuerleistungsquelle (+V) eine integrierte Batterie ist, und die nächtlich abblendende Strombegrenzungslast (D1-D3, R4) eine Strombegrenzungsdiode (D1-D3) beinhaltet.

4. Anzeigeansteuersystem nach einem der Ansprüche 1 bis 3, wobei:
der Hauptschaltkreis außerdem eine Mehrzahl von Anzeigelichtquellen (40) beinhaltet, die parallel zueinander mit dem ersten Schaltelement (Tr1) und einer Mehrzahl von dritten Schaltelementen (Tr2, Tr3), die auf der Hochvoltseite der Anzeigelichtquellen (40), die parallel zueinander und zu der Ansteuerleistungsquelle (V+) verbunden sind, zwischengeschaltet sind, verbunden sind, und wobei die Mehrzahl von dritten Schaltelementen (Tr2, Tr3) die Verbindungen der Anzeigelichtquellen (40) mit der Ansteuerleistungsquelle (V+) zwischen einem Aktivzustand und einem Inaktivzustand an- und ausschaltet; und
die Ansteuer- und Steuerschaltvorrichtung (50) außerdem die Mehrzahl von dritten Schaltelementen (Tr2, Tr3) ansteuert und steuert, so dass jedes von der Mehrzahl von dritten Schaltelementen (Tr2, Tr3) sukzessive auf einer Zeiteinteilungsbasis geschaltet wird, so dass es selektiv in den Aktivzustand versetzt wird.

5. Anzeigeansteuersystem nach Anspruch 4, wobei die Mehrzahl von Anzeigelichtquellen (40) außerdem gemeinsam mit der nächtlich abblendenden Strombegrenzungslast (D1-D3, R4) und dem zweiten Schaltelement (Tr4) verbunden sind.

6. Anzeigeansteuersystem nach einem der Ansprüche 1 bis 5, wobei die Ansteuer-und Steuerschaltvorrichtung (50) außerdem das zweite Schaltelement (Tr4) mit einem Signal, das normalerweise ein konstantes Einschaltverhältnis η_{2ND} aufweist, ohne Berücksichtigung des Ansteuerungszustands der Anzeigelichtquelle (40) des Hauptschaltkreises in dem Nachtmodus ansteuert und steuert.

7. Anzeigeansteuersystem nach Anspruch 6, wobei:
eine Mehrzahl von Hauptschaltkreisen, in denen die Zustände der Anzeigelichtquellen (40) unabhängig zwischen dem Aktivzustand und dem Beleuchtungszustand umgeschaltet werden können, parallel zueinander verbunden und gemeinsam mit der Ansteuerleistungsquelle (+V) verbunden sind; und
die erdungsseitigen Anschlüsse der Zweigansteuerpfade (LB) der jeweiligen Hauptschaltkreise gemeinsam mit dem zweiten Schaltelement (Tr4), das sich die Hauptschaltkreise teilen, verbunden sind.

8. Anzeigeansteuersystem nach Anspruch 6 oder 7, wobei die Ansteuer- und Steuerschaltvorrichtung außerdem das zweite Schaltelement (Tr4) so ansteuert und steuert, dass es in dem Nachtmodus normal leitet.

9. Anzeigeansteuersystem nach einem der Ansprüche 1 bis 8, wobei die Ansteuer-und Steuerschaltmittel (50) außerdem das erste Schaltelement (Tr1), das mit der Anzeigelichtquelle (40), die im Tagmodus ausgeschaltet ist, zusammenhängt, so ansteuert und steuert, dass es normalerweise geöffnet ist.

10. Anzeigeansteuersystem nach einem der Ansprüche 1 bis 9, wobei:
die Ansteuer- und Steuerschaltvorrichtung (50) außerdem das erste Schaltelement (Tr1) mit einem Pulsweitenmodulations (PWM) - Steuersignal, das eine vorgegebene Frequenz aufweist, ansteuert und steuert; und
das PWM-Steuersignal an das erste Schaltelement (Tr1) ausgegeben wird, nachdem das PWM-Steuersignal einen Tiefpassfilter (LPF) mit einer Grenzfrequenz in einem Frequenzband durchlaufen hat, das höher ist als die vorgegebene Frequenz.

11. Anzeigeansteuersystem nach einem der Ansprüche 1 bis 10, wobei:
eine Mehrzahl von Anzeigelichtquellen (40) in einem lichtdurchlässigen Schaltknopf (2a-2c) enthalten sind, der eine Betätigungserkennungseinheit (2a-2c) enthält, die den betätigten Zustand des lichtdurchlässigen Schaltknopfs (2a-2c) erkennt;
die Mehrzahl von Anzeigelichtquellen (40) in dem Schaltknopf (2a-2c) auf Basis der jeweiligen Ansteuerungszustände des ersten Schaltelements (Tr1) und des zweiten Schaltelements (Tr4) angesteuert und gesteuert werden.

## Revendications

1. Système de commande d'indicateur, comprenant :
une source de lumière d'indicateur (40) reliée sur une voie de commande principale (LM) conduisant à une alimentation électrique de commande (+V) ;
un circuit principal comprenant un premier élément de commutation (Tr1) relié sur la voie de commande principale (LM) sur le côté de basse tension de la source de lumière d'indicateur (40), le premier élément de commutation (Tr1) commutant l'état de la source de lumière d'indicateur (40) entre un état actif ayant une luminance active et un état d'illumination ayant une luminance d'illumination inférieure à la luminance active, une voie de commande de branche (LB) se ramifiant d'un noeud sur la voie de commande principale (LM) entre la source de lumière d'indicateur (40) et le premier élément de commutation (Tr1) vers un côté de masse, la voie de commande de branche (LB) fonctionnant comme une voie de conduction auxiliaire pour la source de lumière d'indicateur (40) lorsque le premier élément de commutation (Tr1) est mis dans un état régulé associé à l'état d'illumination, une charge de limitation de courant d'atténuation nocturne (D1-D3, R4) reliée sur la voie de commande de branche (LB), la charge de limitation de courant d'atténuation nocturne (D1-D3, R4) limitant un courant de commande à alimenter à la source de lumière d'indicateur (40) sur la voie de commande de branche (LB) ;
un deuxième élément de commutation (Tr4) inséré en série avec la charge de limitation de courant d'atténuation nocturne (D1-D3, R4) sur la voie de commande de branche (LB), le deuxième élément de commutation (Tr4) régulant une conduction d'électricité vers la source de lumière d'indicateur (40) sur la voie de commande de branche (LB) ;
un moyen de commande et de régulation de commutation (50) pour commander et réguler les éléments de commutation afin d'établir une relation I_{DB} > I_{NB} > I_{ND}, où I_{DB} indique la luminance active de la source de lumière d'indicateur (40) dans l'état actif dans un mode diurne, I_{NB} indique la luminance active de la source de lumière d'indicateur (40) dans l'état actif dans un mode nocturne, et I_{ND} indique la luminance d'illumination de la source de lumière d'indicateur (40), et
un moyen de commutation de mode de commande (5) qui commute le mode de commande pour la source de lumière d'indicateur (40) entre le mode diurne et le mode nocturne ;
**caractérisé en ce que**
le moyen de commande et de régulation de commutation (50) pour commander et réguler les éléments de commutation afin d'établir une relation η_{1DB} > η_{1NB}, η_{2DD} < η_{2ND}, et η_{1NB} < η_{2ND}, où η_{1DB} indique un cycle de service d'un premier signal à délivrer au premier élément de commutation (Tr1) pour atteindre la luminance active dans le mode diurne, η_{1NB} indique le cycle de service du premier signal à délivrer au premier élément de commutation (Tr1) pour atteindre la luminance active dans le mode nocturne, et où η_{2DD} indique un cycle de service d'un deuxième signal à délivrer au deuxième élément de commutation (Tr4) pour atteindre la luminance d'illumination dans le mode diurne et η_{2ND} indique le cycle de service du deuxième signal à délivrer au deuxième élément de commutation (Tr4) pour atteindre l'état d'illumination dans le mode nocturne, et en outre pour commander et réguler le deuxième élément de commutation (Tr4) afin qu'il soit normalement ouvert dans le mode diurne ; et ledit système de commande d'indicateur comprend :
un moyen pour réguler la luminance (I_{DD}) dans l'état d'illumination dans le mode diurne afin qu'elle soit supérieure à la luminance (I_{ND}) dans l'état d'illumination dans le mode nocturne, dans ce cas la relation η_{1DD} > η_{1ND} est établie, et
un moyen pour réguler la luminance (I_{DD}) dans l'état d'illumination dans le mode diurne afin qu'elle soit supérieure à la luminance (I_{NB}) dans l'état actif dans le mode nocturne, dans ce cas la relation η_{1DD} > η_{1NB} est établie,
où η_{1DD} indique un cycle de service du premier signal à délivrer au premier élément de commutation (Tr1) pour atteindre la luminance d'illumination dans le mode diurne, η_{1ND} indique le cycle de service du premier signal à délivrer au premier élément de commutation (Tr1) pour atteindre la luminance d'illumination dans le mode nocturne.

2. Système de commande d'indicateur selon la revendication 1, dans lequel la source de lumière d'indicateur (40) comprend une diode électroluminescente (40), une charge de limitation de courant principale (R1) qui limite la valeur d'un courant à conduire vers la diode électroluminescente (40) est reliée sur la voie de commande principale (LM), et une baisse de tension provoquée par la charge de limitation de courant d'atténuation nocturne (D1-D3, R4) est supérieure à celle provoquée par la charge de limitation de courant principale (R1).

3. Système de commande d'indicateur selon la revendication 2, dans lequel l'alimentation électrique de commande (+V) est une batterie embarquée, et la charge de limitation de courant d'atténuation nocturne (D1-D3, R4) comprend une diode de limitation de courant (D1-D3).

4. Système de commande d'indicateur selon l'une quelconque des revendications 1 à 3, dans lequel :
le circuit principal comprend en outre une pluralité de sources de lumière d'indicateur (40) reliées en parallèle l'une à l'autre au premier élément de commutation (Tr1), et à une pluralité de troisièmes éléments de commutation (Tr2, Tr3) interposés entre le côté de haute tension des sources de lumière d'indicateur (40), qui sont reliées en parallèle l'une à l'autre, et l'alimentation électrique de commande (V+), la pluralité de troisièmes éléments de commutation (Tr2, Tr3) activant et désactivant les liaisons des sources de lumière d'indicateur (40) à l'alimentation électrique de commande (V+) entre un état actif et un état inactif ; et
le moyen de commande et de régulation de commutation (50) est en outre apte à commander et à réguler la pluralité de troisièmes éléments de commutation (Tr2, Tr3) de sorte que chacun de la pluralité de troisièmes éléments de commutation (Tr2, Tr3) soit successivement commuté sur une base à répartition dans le temps afin d'être mis sélectivement dans l'état actif.

5. Système de commande d'indicateur selon la revendication 4, dans lequel la pluralité de sources de lumière d'indicateur (40) sont en outre reliées en commun à la charge de limitation de courant d'atténuation nocturne (D1-D3, R4) et au deuxième élément de commutation (Tr4).

6. Système de commande d'indicateur selon l'une quelconque des revendications 1 à 5, dans lequel le moyen de commande et de régulation de commutation (50) est en outre apte à commander et à réguler le deuxième élément de commutation (Tr4) avec un signal ayant normalement un cycle de service constant η_{2ND} indépendamment de l'état commandé de la source de lumière d'indicateur (40) du circuit principal dans le mode nocturne.

7. Système de commande d'indicateur selon la revendication 6, dans lequel :
une pluralité de circuits principaux dans lesquels les états des sources de lumière d'indicateur (40) peuvent être commutés indépendamment entre l'état actif et l'état d'illumination sont reliés en parallèle l'un à l'autre et sont reliés en commun à l'alimentation électrique de commande (+V) ; et
les bornes de côté de masse des voies de commande de branche (LB) des circuits principaux respectifs sont reliées en commun au deuxième élément de commutation (Tr4) qui est partagé par les circuits principaux.

8. Système de commande d'indicateur selon la revendication 6 ou 7, dans lequel le moyen de commande et de régulation de commutateur est en outre apte à commander et à réguler le deuxième élément de commutation (Tr4) afin de conduire normalement dans le mode nocturne.

9. Système de commande d'indicateur selon l'une quelconque des revendications 1 à 8, dans lequel le moyen de commande et de régulation de commutation (50) est en outre apte à commander et à réguler le premier élément de commutation (Tr1) associé à la source de lumière d'indicateur (40) éteinte dans le mode diurne afin d'être normalement ouvert.

10. Système de commande d'indicateur selon l'une quelconque des revendications 1 à 9, dans lequel :
le moyen de commande et de régulation de commutation (50) est en outre apte à commander et à réguler le premier élément de commutation (Tr1) en utilisant un signal de régulation à modulation de largeur d'impulsion (PWM) ayant une fréquence prédéterminée ; et
le signal de régulation PWM est entré dans le premier élément de commutation (Tr1) après le filtrage du signal de régulation PWM par un filtre passe-bas (LPF) ayant une fréquence de coupure dans une bande de fréquences supérieure à la fréquence prédéterminée.

11. Système de commande d'indicateur selon l'une quelconque des revendications 1 à 10, dans lequel :
une pluralité de sources de lumière d'indicateur (40) sont incorporées dans un bouton de commutateur translucide (2a-2c) comprenant une unité de détection de manipulation (2a-2c) qui détecte l'état manipulé du bouton de commutateur translucide (2a-2c) ;
sur la base des états de commande respectifs du premier élément de commutation (Tr1) et du deuxième élément de commutation (Tr4), la pluralité de sources de lumière d'indicateur (40) dans le bouton de commutateur (2a-2c) sont commandées et régulées.
